(19) Europäisches Patentamt
European Patent Office
Office européen des brevets

(11) Publication number: 0 604 460 B1

# (12) EUROPEAN PATENT SPECIFICATION

(45) Date of publication of patent specification: 20.12.95

(51) Int. Cl.[6]: C09J 7/00, C09J 179/06

(21) Application number: 92917237.7

(22) Date of filing: 31.07.92

(86) International application number: PCT/US92/06366

(87) International publication number: WO 93/05122 (18.03.93 93/08)

## (54) ADHESIVE FILM

(30) Priority: 11.09.91 US 757727

(43) Date of publication of application: 06.07.94 Bulletin 94/27

(45) Publication of the grant of the patent: 20.12.95 Bulletin 95/51

(84) Designated Contracting States: DE FR GB NL

(56) References cited:
EP-A- 0 298 742
DE-A- 3 426 883
DE-A- 3 509 220
FR-A- 2 305 300
GB-A- 2 097 401
US-A- 3 708 379

(73) Proprietor: MINNESOTA MINING AND MANUFACTURING COMPANY
3M Center,
P.O. Box 33427
St. Paul,
Minnesota 55133-3427 (US)

(72) Inventor: EMORI, Kenji
P.O. Box 33427
Saint Paul, MN 55133-3427 (US)
Inventor: ISHII, Shigeyoshi
P.O. Box 33427
Saint Paul, MN 55133-3427 (US)

(74) Representative: VOSSIUS & PARTNER
Siebertstrasse 4
D-81675 München (DE)

EP 0 604 460 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a cyanate ester adhesive film which can be cured extremely rapidly and has excellent storage stability.

Various types of adhesives are known in the art. For use in the electronics industry, an adhesive must meet specific requirements. First, in the swiftly growing semiconductor industry, a rapid cure rate, e.g., 30 seconds or less at 180 °C, is required for productivity. These conditions, formerly known as "rapid curing" are becoming insufficient for productivity reasons, and even faster curing adhesives are being required. Further, the adhesive used must be unreactive after curing, and noncorrosive to metals. Most conventional adhesives cannot meet these strict criteria.

Phenol resin/nitrile rubber thermally curable adhesives are well known. However, due to the use of phenol as the thermal curing agent, the phenol resin/nitrile rubber adhesives are slow curing, and are extremely corrosive to metals. Further, they may pose a safety risk by containing unreacted formaldehydes. The emulsion-polymerized nitrile rubber thermoplastic ingredient, is thus unsuitable for electronic applications, due to possible corrosion of the electronic article and/or malfunction of the semiconductor.

Urethane/isocyanate adhesives are also well known in the adhesive art. However, the urethane resin/isocyanate adhesives have poor storage stability, and inferior mechanical strength and heat resistance.

Epoxy resin/PVB adhesives also cure too slowly for the desired applications, and may contain undesired halogens generated from the preparation.

Various "improved" adhesives have been proposed for use in the electronics industry.

An adhesive having improved curing time is disclosed in JP 52-22849, comprising a three-layered film in which an epoxy resin and a curing agent are divided into the outside layers with a diaphragm layer therebetween, and an unsaturated compound, e.g., an acrylic monomer, and a peroxide curing catalyst are similarly divided in order to improve reactivity.

However, peroxide is extremely dangerous to handle and store, especially in the presence of metal particles, and unsaturated acrylic monomers have odor and toxicity problems. Further, even when carefully formulated, the epoxy resin and the curing agent may not mix exactly as desired, causing variation in the adhesive film. Also, the method of preparation is expensive, and requires many complicated steps.

Another rapidly curing adhesive, a combination of a cyanate ester resin with an organometallic compound, is disclosed in JA 2-105823. The adhesive resin has relatively good storage stability, however the metal catalyst may affect the release agent after processing into a film.

In the above adhesives, the cure rate could only been changed by varying the type and/or amount of the curing catalyst. When adhesives having different curing rates are required, it is necessary to prepare each adhesive separately.

An anisotropic conductive membrane in which conductive particles are added to an adhesive film is also known for use with electronics. However, the thickness must be selected for the substance to be adhered. In the conventional technique, it is necessary to prepare anisotropic conductive adhesive membranes for each substance to be adhered.

It has now been discovered that an adhesive comprising a primary agent layer containing a cyanate ester resin and a thermoplastic resin, and a catalyst layer comprising at least one organometallic compound, metal chelate or organic metal salt, and a thermoplastic resin can be cured very rapidly, has excellent storage stability, and is not corrosive to metal.

The present invention provides an adhesive film which can be cured very rapidly, and which has excellent storage stability.

Specifically, adhesive films of the present invention comprise an primary agent layer cyanate ester resin and a thermoplastic resin, and a catalyst layer comprising at least one organometallic compound, metal chelate or organic metal salt, and a thermoplastic resin.

Preferred adhesive films comprises

a) at least one primary agent layer comprising a cyanate ester resin having a molecular weight of from about 150 to about 2,000, and a thermoplastic resin having a molecular weight of from about 3,000 to about 200,000, and

b) at least one catalyst layer comprising from about 0.01 to about 10 parts by weight of at least one curing agent selected from the group consisting of organometallic compounds, metal chelates, and organic metal salts, and a thermoplastic resin having a molecular weight of from about 3,000 to about 200,000, wherein the sum of the thermoplastic resin in both the primary agent layer and the catalyst layer is from about 10 to about 300 parts per 100 parts cyanate ester resin.

The cyanate ester resin is suited for use in the electronic industry. The thermal resistance and creep resistance are excellent, and the resin may be cured very quickly. The resins are also self-crosslinking.

Useful cyanate ester resins contain monomer and oligomers having at least one cyanate group in the molecular chain and derivatives thereof.

Preferred compositions of the invention include one or more cyanate esters according to Formulas I, II, III or IV. Formula I is represented by

$Q(OCN)_p$ Formula I

wherein p can be from 2 to 7, and wherein Q comprises at least one of the following categories: (1) a mono-, di-, tri-, or tetra-substituted aromatic hydrocarbon containing from about 5 to about 30 carbon atoms, (2) a 1 to 5 aliphatic or polycyclic aliphatic mono-, di-, tri-or tetra- substituted hydrocarbon containing from about 7 to about 20 carbon atoms. Optionally, either category may contain from about 1 to about 10 heteroatoms selected from the group consisting of non-peroxidic oxygen, sulfur, non-phosphino phosphorous, non-amino nitrogen, halogen, and silicon.

Formula II is represented by

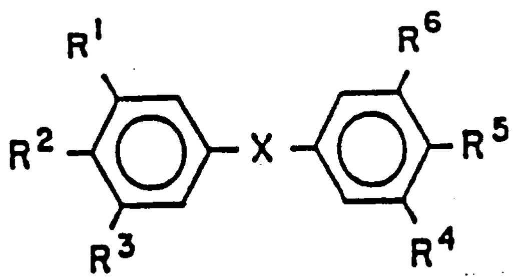

Formula II

where X is a single bond, a lower alkylene group having from 1 to 4 carbons, -S-, or the $SO_2$ group; and where $R^1$, $R^2$, $R^3$, $R^4$, $R^5$, and $R^6$ are independently hydrogen, an alkyl group having from one to three carbon atoms, or the cyanate ester group (-OC≡N), with the proviso that at least two of $R^1$, $R^2$, $R^3$, $R^4$, $R^5$, and $R^6$ are cyanate ester groups. In preferred compounds, each of the R groups is either -H, methyl or the cyanate ester group.

Formula III is represented by

Formula III

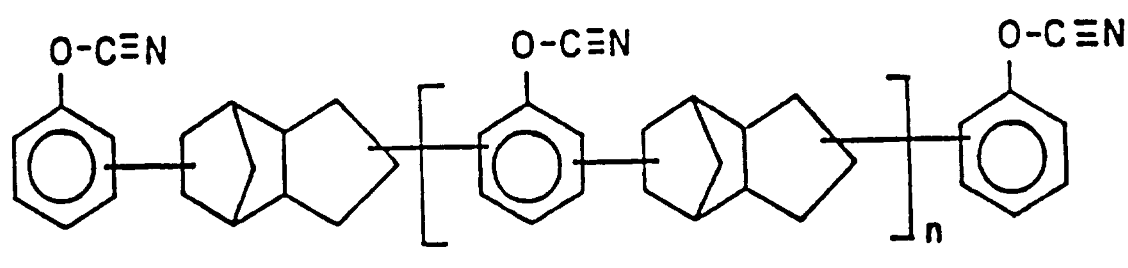

where n is from 0 to about 5.

Formula IV is represented by

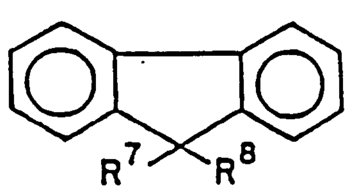

Formula IV

wherein $R^7$ and $R^8$ are independently

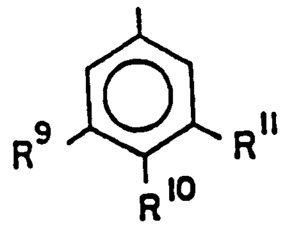

wherein $R^9$, $R^{10}$, $R^{11}$ are independently -H, a lower alkyl group having from about 1 to about 5 carbon atoms, or the cyanate ester group, preferably hydrogen, methyl or the cyanate ester group, with the proviso that $R^7$, and $R^8$ combined include at least two cyanate ester groups.

Useful cyanate ester compounds include, but are not limited to the following:
1,3- and 1,4-dicyanatobenzene;
2-tert-butyl-1,4-dicyanatobenzene;
2,4-dimethyl-1,3-dicyanatobenzene;
2,5-di-tert-butyl-1,4-dicyanatobenzene;
tetramethyl-1,4-dicyanatobenzene;
4-chloro-1,3-dicyanatobenzene;
1,3,5-tricyanatobenzene;
2,2'- and 4,4'-dicyanatobiphenyl;
3,3'5,5'-tetramethyl-4,4'-dicyanatobiphenyl;
1,3-, 1,4-, 1,5-, 1,6-, 1,8-, 2,6-, and 2,7-dicyanatonaphthalene;
1,3,6-tricyanatonaphthalene;
bis(4-cyanatophenyl)methane;
bis(3-chloro-4-cyanatophenyl)methane;
bis(3,5-dimethyl-4-cyanatophenyl)methane;
1,1-bis(4-cyanatophenyl)ethane;
2,2-bis(4-cyanatophenyl)propane;
2,2-bis(3,3-dibromo-4-cyanatophenyl)propane;
2,2-bis(4-cyanatophenyl)-1,1,1,3,3,3-hexafluoropropane;
bis(4-cyanatophenyl)ester;
bis(4-cyanatophenoxy)benzene;
bis(4-cyanatophenyl)ketone;
bis(4-cyanatophenyl)thioether;
bis(4-cyanatophenyl)sulfone;
tris(4-cyanatophenyl)phosphate, and
tris(4-cyanatophenyl)phosphate.

Also useful are cyanic acid esters derived from phenolic resins, e.g., as disclosed in U.S. Patent 3,963,184, cyanated novolac resins derived from novolac, e.g., as disclosed in U.S. Patent No. 4,022,755, cyanated bis-phenol-type polycarbonate oligomers derived from bisphenol-type polycarbonate oligomers, as disclosed in U.S. Patent 4,096,913, cyano-terminated polyarylene ethers as disclosed in U.S. Patent No. 3,595,000, and dicyanate esters free of ortho hydrogen atoms as disclosed in U.S. Patent No. 4,740,584, mixtures of di-and tricyanates as disclosed in U.S. Patent No. 4,709,008, polyaromatic cyanates containing polycyclic aliphatic groups as disclosed in U.S. Patent No. 4,528,266, e.g., QUARTEX™ 7187, available from Dow Chemical, fluorocarbon cyanates as disclosed in U.S. Patent No. 3,733,349, and cyanates disclosed in U.S. Patents 4,195,132, and 4,116,946.

Polycyanate compounds obtained by reacting a phenol-formaldehyde precondensate with a halogenated cyanide are also useful.

Examples of preferred cyanate ester compositions include low molecular weight oligomers, e.g., from about 250 to about 1200, of bisphenol-A dicyanates such as AroCy UC-30 Cyanate Ester Semisolid Resin, commercially available from Hi-Tex polymers, Jeffersontown, Kentucky; low molecular weight oligomers of tetra o-methyl bisphenol F dicyanates, such as AroCy M-30 Cyanate Ester Semisolid Resin, also commercially available from Hi-Tek Polymers; low molecular weight oligomers of thiodiphenol dycyanated, such as AroCy T-30 Cy.

Useful thermoplastic resins are those having good compatibility with cyanate ester, and film -forming properties to aid in flexibility. Included in this class are polyvinylformyls, polyvinylacetals, polyvinylbutylols, polyamide, polyimides, polysulfones, polyesters, polyesterimides, polycarbonates, polycarbonatesiloxanes, polyethers, polyallylates, polyimidesiloxanes, phenoxy resins, carboxylated SEBS, acrylic reins, and polyurethanes. Useful thermoplastic resins are those having molecular weights between about 3,000 and about 200,000. If the molecular weight is below about 3000, the resin has a poor film-forming ability, and the resulting film is brittle; if the molecular weight is over 200,000, the thermoplastic and the cyanate ester will not mix adequately, and the curing time is significantly extended.

Useful thermoplastic resins are similar for those in the catalyst layer and those in the primary agent layer. The thermoplastic resin used in the two layers may be the same or different.

The amounts of thermoplastic resin in the primary agent layer and in the catalyst layer together comprise from about 10 to about 300 parts to 100 parts of cyanate ester resin.

Known curing catalysts are useful in compositions of the invention. An organometallic compound, metal chelate or an organometallic salt are suitable candidates. Examples of organometallic compounds, such as acetylacetonate copper and cobalt acrylacetonate are disclosed in JP 2-105823. Examples of the organometallic salts include cobalt naphthenate and copper anthenate. These catalysts are activated by both beat and light, and therefore exposure to heat can shorten the curing time even more. They are easily dissolved and dispersed in the adhesive solution.

Catalysts for the reaction of the cyanate ester include organometallic compounds containing a cyclopentadienyl group, $C_5H_5$, and suitable derivatives, such as cyclopentadienyl iron dicarbonyl dimer, $[C_5H_5Fe(CO)_2]_2$, pentamethylcyclopentadienyl iron dicarbonyl dimer,$[C_5(CH_3)_5Fe(CO)_2]_2$, methylcyclopentadienyl manganesetricarbonyl, all available from Strem Chemical Company, Newburyport, Massachusetts, and hexafluorophosphate salt of the cyclopentadientyl iron mesitylene cation, $C_5H_5$ (mesitylene)$Fe^+PF_6^-$, and trifluoromethanesulfonate salt of the cyclopentadienyl iron mesitylene cation, $C_5H_5$ (mesitylene)-$Fe^+CF_3SO_3^-$, both of which may be prepared as described in U.S. Patent 4,868,277.

Other organometallic compounds which are suitable catalysts for use in the present invention are disclosed in EPO Publication No. 364,073.

Suitable sources of radiation for photoactivation of the catalysts include such conventional sources as mercury vapor discharge lamps, tungsten lamps, xenon lamps, fluorescent lamps, sunlamps, lasers, carbon arcs, and sunlight. Photoactivated catalysts are preferred as they increase shelf life. The layers are typically formed on a release liner or paper.

The amount of catalyst used preferably falls in the range of from about 0.01 to about 10 parts by weight per 100 parts of the cyanate ester resin.

The number of layers is not critical. Preferred embodiments of the invention contain from about 1 to about 3 catalyst layers, and 1 or 2 primary agent layers. It is important to note, that the catalyst layers are not necessarily in contact with the entire surface of the primary agent layer, and may be present on isolated areas of the primary agent layer, by such techniques as screen printing.

Thickness of the layers are dependent on such factors as the number of layers and the specific application. The primary agent layer ranges from about 1 micrometer to about 100 micrometers. The catalyst layer ranges from about 0.1 micrometer to about 50 micrometers.

If desirable, a third layer may also be present. This layer may be provided in order to improve storage stability, film formation and the like. For example, a polyvinyl butryal, polysulfone, nylon, epoxy/amine or the like can be used as a third layer having a thickness of from about 0.1 micrometer to about 50 micrometers.

Conventional adjuvants such as electrically conductive particles, thermally conductive particles, silane coupling agents, antioxidants, copper deterioration proofing agents, and tackifiers may be added to the adhesive films of the present invention when desired.

Examples of the processes useful for preparation of the adhesive film of the present invention include, but are not limited to, conventional processes such as Meyer bar coating, knife coating, die coating, extrusion, lamination processes, printing, and the like.

As solvents for use in the film formation, methyl ethyl ketone (MEK), tetrahydrofuran (THF), chloroform and the like are useful.

The invention can further comprise other thermosetting resins such as phenolic and silicone resins, epoxy hardeners, tackifiers, coupling agents, antioxidants, modifiers and additives without departing from the spirit of the invention.

All percents, parts and ratios herein are by weight unless specifically stated otherwise. The following examples are meant to be illustrative and do not limit the scope of the invention, which is defined solely by the claims.

Examples

Example 1

(1) Formation of the Main Agent Layer:

As a cyanate ester resin, 100 g of AROCY (2,2-bis(4-cyanatophenyl)propane; molecular weight; about 270; supplied from Hi-Tek Polymers) was dissolved in 200 g of methyl ethyl ketone. In this was dissolved 100 g of S-LEC B BX-1 (polyvinyl butyral, molecular weight; about 100,000; supplied from Sekisui Chemical) as a thermoplastic resin to prepare a main agent solution. This was coated on a silicone-treated polyester film having a thickness of 50 μm by a hand coater, and then dried to form a main agent layer having a thickness of 20 μm.

(2) Formation of Curing Catalyst Layer:

As a thermoplastic resin, 100 g of BX-1 was dissolved in 500 g of MEK, and 5 g of cyclopentadienyl iron dicarbonyl diver ($[C_5H5\bullet Fe\bullet(CO)_2]_2$; hereinafter abbreviated as IDC) was added thereto to prepare a homogenous curing catalyst solution. This was coated on a silicone-treated polyester film by a hand coater, and then dried to form a curing catalyst layer having a thickness of 5 μm.

(3) Preparation of the Adhesive Film:

The above-mentioned main agent layer and the curing catalyst layer were laminated by a laminator under the conditions of 100 °C x 5 kg/cm$^2$ x 2 seconds to obtain an adhesive film.

(4) Evaluation of the Film Formation:

Film formation was evaluated from handling properties and appearance.

| | |
|---|---|
| Very Good: | Possible to handle, flexible |
| Good: | Possible to handle, slightly brittle |
| Normal: | Possible to handle, cracks appeared |
| Poor: | Impossible to handle, cracks throughout |

(5) Evaluation of the Reactivity 1:

The sheet is heated up by means of DSC 4 (differential scanning calorimeter, supplied from Perkin Elmer) at a rate of 10 °C/min. to measure an exothermic peak temperature at this time.

| | |
|---|---|
| Very Good: | Peak Temp. of 150 °C or less |
| Good: | Peak Temp. of 170 °C or less |
| Moderate: | Peak Temp. of 190 °C or less |
| Poor: | Peak Temp. of more than 210 °C |

(6) Evaluation of the Reactivity 2:

Tack free times (TFT) were determined at 180 °C by a plate gel timer.

| | |
|---|---|
| Very Good: | TFT of 10 sec. or less |
| Good: | TFT of 30 sec. or less |
| Moderate: | TFT of 60 sec. or less |
| Poor: | TFT of more than 60 sec. |

(7) Evaluation of the Storage Stability:

A Sample was left standing at either room temperature or 80 °C, and the storage stability was evaluated by a bending test. In the bending test, the sample was bent 180°, and the time required for cracking was measured.

| | Time for Cracking | |
|---|---|---|
| | Room Temp. | 80 °C |
| Very Good: | 1 month or more | 1 hour or more |
| Good: | 2 weeks or more | 30 minutes or more |
| Moderate: | 1 week or more | 20 minutes or more |
| Poor: | within 1 week | 10 minutes |

(8) Evaluation of the Adhesive Force:

An Au plated 35 μ Cu/50 μ polyimide flexible printed circuit (space 0.1 mm/pitch 0.2 mm) and an ITO glass (plane resistance: 30 Ω/□) were rolled by means of a J3 bonder (thermal roller, supplied from Sumitomo 3M) under the conditions of 180 °C x 30 kg/$cm^2$ x 20 seconds, and a peeling strength at 90 ° was measured by using a tension at a stress rate of 50 mm/min.

| | Adhering Force |
|---|---|
| Very Good: | 1000 g/cm or more |
| Good: | 500 g/cm or more |
| Moderate: | 300 g/cm or more |
| Poor: | 300 g/cm or more |

Examples 2-13

In these Examples, types of the cyanate resins, types of thermoplastic resins (including the case in combination with thermosetting resins), and the amount thereof, and types and amounts of curing catalysts were varied. The preparation and evaluation of the films were as in Example 1. The resins and the curing catalysts used are as follows:

Cyanate Ester Resin

AROCY B30 (2,2-Bis(4-cyanatophenyl)propane; Molecular weight about 560; supplied from Hi-Tek Polymers)
AROCY B50 (2,2-Bis(4-cyanatophenyl)propane; Molecular weight about 1,100; supplied from Hi-Tek Polymers)
AROCY M30 (Bis-3,5-dimethyl(4-cyanatophenyl)methane; Molecular weight about 490; supplied from Hi-Tek Polymers)
QUATREX XU71787 (Alicyclic aromatic cyanate ester, supplied from Dow Chemical Co.)

Thermoplastic Resin

Eryther UE 3300 (Polyester Resin; Molecular weight about 8,000; Unitika Ltd.)
UDEL P1700 (Polysulfone; supplied from Amoco)
UCAR PKHC (Phenoxy Resin; Molecular weight about 25,000; supplied from UCC)
Tough Tec M1913 (Carboxylated SEBS resin: Molecular weight about 50,000, supplied from Asahi Chemical Industry Co., Ltd.)
S-LEC B BXL (PVB; Molecular weight about 18,000; supplied from Sekisui Chemical)
S-LEC BX5 (PVB; Molecular weight about 150,000; supplied from Sekisui Chemical)

Thermosetting Resin

Epicoat 828 (DGEBA epoxy; Molecular weight about 380; supplied from Shell Chemicals)
Sumilec PC 1 (Resol phenol; Sumitomo Dules)

Curing Catalyst

IDC
Cobalt acetylacetate (abbreviated as "AcAcCo")
Copper naphthenate (abbreviated as "NpCu")
$Fe_{2}.(CO)_{9}.Mn_{2}.CO)_{10}$

EXAMPLES 14-16

In these examples, the numbers of the main agent layers and the curing catalyst layers varied. The preparation and evaluation of the film were as in Example 1.

EXAMPLE 17

In this example, to the main agent layer 10 parts by weight of Fine Pearl Au-10S (Au-plated electrically conductive particle supplied from Sumitomo Chemicals) was added based on 100 parts by weight of XU71787 main agent. The sample for measuring the adhesive force was aged at 85°C for 85 hours, and the resistance was measured by using a multimeter.

COMPARATIVE EXAMPLES 1-5

These comparative examples deviate from the scope of the present invention. The preparation and evaluation of the film were as in Example 1.

COMPARATIVE EXAMPLE 6

(1) Preparation of the Film:

To the solution prepared in Example 1 (1), 10 parts by weight of IDC was added based on 100 parts by weight of B10, and then homogeneously dispersed and mixed. Thereafter, the mixture was applied on a silicone-treated polyester film by a hand coater and then dried to obtain an adhesive film.

(2) Evaluation:

The evaluation was the same as that of Example 1 (4)-(8).

COMPARATIVE EXAMPLE 7

This is an example of the conventional adhesive sheet.

(1) Preparation of the Film:

100 g of BX-1 was dissolved in 500 g of MEK. 100 g of Epicoat 828 and 10 g of Curezole 2E4MZ (imadazoles, supplied from Shikoku Chemical) as a curing agent were added thereto to prepare a homogenous curing catalyst solution. This was applied on a silicone-treated polyester film by a hand coater and then dried to obtain an adhesive film.

(2) Evaluation:

The evaluation was the same as that of Example 1 (4) -(8).

COMPARATIVE EXAMPLE 8

This example was the same as that of Comparative Example 7, except that 10 parts by weight of Fine Pearl was added in the adhesive based on 100 parts by weight of Epicoat 828. The resistance measurement was carried out as in Example 17 using a sample for measuring the adhesive force.

These results are shown in Tables 1, Table 2, Table 3, Table 4, and Table 5.

TABLE 1

| | | Ex. 1 | Ex. 2 | Ex. 3 | Ex. 4 | Ex. 5 | Ex. 6 |
|---|---|---|---|---|---|---|---|
| Main Agent Layer | Cyanate | B10/100 | B50/100 | B30/100 | M30/100 | XU71787/100 | B30/100 |
| | Thermoplastic Resin | BX1/100 | P1700/100 | BE3300/100 | PKHC/100 | M1913/100 | BXL/100 |
| | Thickness ($\mu$) | 20 | 20 | 10 | 20 | 20 | 20 |
| Curing Catalyst Layer | Catalyst | IDC/5 | AcAcCo/5 | NpCu/5 | IDC/5 | IDC/5 | Fe2(CO)9/0.05 |
| | Thermoplastic Resin | BX1/100 | 828/100 | PC1/100 | BXL/100 | M1913/100 | BXL/100 |
| | Thickness ($\mu$) | 5 | 5 | 15 | 5 | 5 | 5 |
| Results | Film Formation | Very Good | Good | Very Good | Very Good | Very Good | Very Good |
| | DSC | Very Good | Very Good | Very Good | Very Good | Very Good | Good |
| | TFT | Very Good | Very Good | Very Good | Very Good | Very Good | Good |
| | Storage Stability (Room Temp.) | Very Good | Very Good | Very Good | Very Good | Very Good | Very Good |
| | Storage Stability (80°C) | Very Good | Very Good | Very Good | Very Good | Very Good | Very Good |
| | Adhesive Force | Very Good | Very Good | Very Good | Very Good | Very Good | Good |

TABLE 2

| | | Ex. 7 | Ex. 8 | Ex. 9 | Ex. 10 | Ex. 11 | Ex. 12 |
|---|---|---|---|---|---|---|---|
| Main Agent Layer | Cyanate | B30/100 | B30/100 | B30/100 | XU71787/100 | XU71787/100 | XU717871/100 |
| | Thermoplastic Resin | BXL/100 | BX5/50 | BX5/50 | BX1/50 | BX1/50 | BX1/50 |
| | Thickness ($\mu$) | 20 | 20 | 20 | 20 | 20 | 20 |
| Curing Catalyst Layer | Catalyst | Fe2(CO)9/0.5 | Mn2(CO)10/10 | Mn2(CO)10/25 | IDC/0.05 | IDC/10 | Mn2(CO)10/5 |
| | Thermoplastic Resin | BX1/100 | BXL/100 | BXL/100 | PKHC/100 | M1913/100 | M1913/100 |
| | Thickness ($\mu$) | 5 | 5 | 5 | 5 | 10 | 10 |
| Results | Film Formation | Very Good | Very Good | Very Good | Very Good | Very Good | Very Good |
| | DSC | Very Good | Very Good | Very Good | Very Good | Very Good | Very Good |
| | TFT | Very Good | Very Good | Very Good | Very Good | Very Good | Very Good |
| | Storage Stability (Room Temp.) | Very Good | Very Good | Good | Very Good | Very Good | Very Good |
| | Storage Stability (80°C) | Very Good | Very Good | Good | Very Good | Very Good | Very Good |
| | Adhesive Force | Very Good | Very Good | Very Good | Very Good | Very Good' | Very Good |

TABLE 3

| | | Ex. 13 | Ex. 14 | Ex. 15 | Ex. 16 | Ex. 17 |
|---|---|---|---|---|---|---|
| Main Agent Layer | Cyanate | B30/100 | B30/100 | B30/100 | B30/100 | XU71787/100 (Au10s/10) |
| | Thermoplastic Resin | BX1/100 | PX1/100 | BX1/100 | BX1/100 | BX1/100 |
| | Thickness ($\mu$) | 10 | 30 | 20 | 10x2 | 20 |
| | No. of Layer | 1 | 1 | 1 | 2 | 1 |
| Curing Catalyst Layer | Catalyst | IDC/5 | IDC/5 | IDC/5 | IDC/5 | IDC/5 |
| | Thermoplastic Resin | BX1/100 | BX1/100 | BX1/100 | BX1/100 | BX1/100 |
| | Thickness ($\mu$) | 10 | 2 | 2x2 | 2x3 | 5 |
| | No. of Layer | 1 | 1 | 2 | 3 | 1 |
| Results | Film Formation | Very Good | Good | Very Good | Very Good | Very Good |
| | DSC | Very Good | Very Good | Very Good | Very Good | Very Good |
| | TFT | Very Good | Very Good | Very Good | Very Good | Very Good |
| | Storage Stability (Room Temp.) | Very Good | Good | Very Good | Good | Very Good |
| | Storage Stability (80°C) | Very Good | Good | Very Good | Good | Very Good |
| | Adhesive Force | Very Good | Very Good | Very Good | Very Good | Very Good |

TABLE 4

| | | Comp. Ex. 1 | Comp. Ex. 2 | Comp. Ex. 3 | Comp. Ex. 4 | Comp. Ex. 5 |
|---|---|---|---|---|---|---|
| Main Agent Layer | Cyanate | B30/100 | UX71787/100 | B30/100 | B30/100 | B30/100 |
| | Thermoplastic Resin | BXL/100 | BXL/100 | BXL/3 | BXL/50 | BX1/300 |
| | Thickness (μ) | 10 | 20 | 40 | 10 | 20 |
| | No. of Layer | 1 | 1 | 1 | 1 | 1 |
| Curing Catalyst Layer | Catalyst | IDC/5 | Mn2(CO)10/.01 | IDC/10 | IDC/5 | IDC/1 |
| | Thermoplastic Resin | BXL/100 | BXL/100 | BXL/100 | 828/400 | BX1/100 |
| | Thickness (μ) | 10 | 5 | 2 | 10 | 5 |
| | No. of Layer | 1 | 1 | 1 | 1 | 1 |
| Results | Film Formation | Very Good | Very Good | Poor | Poor | Very Good |
| | DSC | Very Good | Poor | Very Good | Poor | Normal |
| | TFT | Very Good | Poor | Very Good | Poor | Poor |
| | Storage Stability (Room Temp.) | Normal | Very Good | - | - | Very Good |
| | Storage Stability (80°C) | Poor | Very Good | - | - | Very Good |
| | Adhesive Force | Very Good | Very Good | - | - | Normal |

Table 5

| | Initial Value | 24 hrs. | 168 hrs. | 500 hrs. | 1000 hrs. |
|---|---|---|---|---|---|
| Ex. 17 | 12.3 | 12.5 | 12.7 | 12.8 | 12.9 |
| Comp.Ex. 8 | 32.9 | 59.2 | (7) | (12) | (13) |

Unit: Ω

The number in parentheses is the number of failed conduction terminals per 20 terminals.

## Claims

1. An adhesive film comprising
    a) at least one primary agent layer comprising a cyanate ester resin having a molecular weight of from about 150 to about 2,000, and a thermoplastic resin having a molecular weight of from about 3,000 to about 200,000, and
    b) at least one catalyst layer comprising from about 0.01 to about 10 parts by weight per 100 parts of the cyanate ester resin of at least one curing agent selected from the group consisting of organometallic compounds, metal chelates, and organic metal salts, and a thermoplastic resin having a molecular weight of from about 3,000 to about 200,000,

    wherein the sum of the thermoplastic resin in both the primary agent layer and the catalyst layer is from about 10 to about 300 parts per 100 parts cyanate ester resin.

2. The adhesive film of claim 1 wherein the primary agent layer and the catalyst layer are in contact with each other.

3. The adhesive film of claim 1 wherein a third layer is interposed between the primary agent layer and the catalyst layer.

4. The adhesive film of claim 3 wherein said third layer comprises at least member selected from the group consisting of polyvinyl butyral, polysulfone, nylon, and epoxy/amine.

5. The adhesive film of claim 4 wherein said third layer has a thickness of from about 0.1 micrometer to about 50 micrometers.

6. The adhesive film of claim 1 further comprising a release layer.

7. The adhesive film of claim 1 wherein the cyanate ester resin is selected from the group consisting of oligomers of bisphenol-A dicyanates, oligomers of tetra o-methyl bisphenol F dicyanates, and oligomers of thiodiphenol dicyanates, said oligomer having a molecular weight of from about 250 to about 1200.

8. The adhesive film of claim 7 wherein the thermoplastic resin is selected from the group consisting of polyvinylformyls, polyvinylacetals, polyvinylbutylols, polyamide, polyimides, polysulfones, polyesters, polyesterimides, polycarbonates, polycarbonatesiloxanes, polyethers, polyallylates, polyimidesiloxanes, phenoxy resins, carboxylated SEBS, acrylic reins, and polyurethanes.

9. The adhesive film of claim 1 wherein the thermoplastic resin used in said primary agent layer is the same as the thermoplastic resin used in said catalyst layer.

10. The adhesive film of claim 1 wherein the primary agent layer has a thickness of from about 1 micrometer to about 100 micrometers, and the catalyst layer has a thickness of from about 0.1 micrometer to about 50 micrometers.

## Patentansprüche

1. Klebefilm, umfassend
    a) mindestens eine Schicht mit hauptsächlich vorhandenem Stoff, die ein Cyanatesterharz mit einem Molekulargewicht von etwa 150 bis etwa 2000 und ein thermoplastisches Harz mit einem Molekulargewicht von etwa 3000 bis etwa 200000 umfaßt und
    b) mindestens eine Schicht mit einem Katalysator, die etwa 0,01 bis etwa 10 Gew.-Teile pro 100 Teile des Cyanatesterharzes mindestens eines Härters, ausgewählt aus der Gruppe bestehend aus Organometallverbindungen, Metallchelaten und organischen Metallsalzen, und ein thermoplastisches Harz mit einem Molekulargewicht von etwa 3000 bis etwa 200000 umfaßt,

    wobei die Summe des thermoplastischen Harzes in der Schicht mit hauptsächlich vorhandenem Stoffund der Schicht mit einem Katalysator zusammen etwa 10 bis etwa 300 Teile pro 100 Teile des Cyanatesterharzes beträgt.

2. Klebefilm nach Anspruch 1, wobei die Schicht mit hauptsächlich vorhandenem Stoff und die Schicht mit einem Katalysator in Kontakt miteinander sind.

3. Klebefilm nach Anspruch 1, wobei eine dritte Schicht zwischen der Schicht mit hauptsächlich vorhandenem Stoff und der Schicht mit einem Katalysator angeordnet ist.

4. Klebefilm nach Anspruch 3, wobei die dritte Schicht mindestens einen Bestandteil, ausgewählt aus der Gruppe bestehend aus Polyvinylbutyral, Polysulfon, Nylon und Epoxid/Amin-Harz, umfaßt.

5. Klebefilm nach Anspruch 4, wobei die dritte Schicht eine Dicke von etwa 0,1 Mikrometer bis etwa 50 Mikrometer besitzt.

6. Klebefilm nach Anspruch 1, der ferner eine Ablöseschicht umfaßt.

7. Klebefilm nach Anspruch 1, wobei das Cyanatesterharz aus der Gruppe bestehend aus Oligomeren von Bisphenol-A-dicyanaten, Oligomeren von Tetra-o-methylbisphenol-F-dicyanaten und Oligomeren von Thiodiphenoldicyanaten ausgewählt ist, wobei das Oligomer ein Molekulargewicht von etwa 250 bis etwa 1200 besitzt.

8. Klebefilm nach Anspruch 7, wobei das thermoplastische Harz aus der Gruppe bestehend aus Polyvinylformyl-, Polyvinylacetal-, Polyvinylbutylol-, Polyamid-, Polyimid-, Polysulfon-, Polyester-, Polyesterimid-, Polycarbonat-, Polycarbonatsiloxan-, Polyether-, Polyallylat-, Polyimidsiloxan-, Phenoxyharzen, carboxyliertem SEBS, Acrylharzen und Polyurethanen ausgewählt ist.

9. Klebefilm nach Anspruch 1, wobei das in der hauptsächlich vorhandenen Stoff aufweisenden Schicht verwendete thermoplastische Harz das gleiche ist, wie das in der Schicht mit einem Katalysator verwendete thermoplastische Harz.

10. Klebefilm nach Anspruch 1, wobei die Schicht mit hauptsächlich vorhandenem Stoff eine Dicke von etwa 1 Mikrometer bis etwa 100 Mikrometer besitzt und die Schicht mit einem Katalysator eine Dicke von etwa 0,1 Mikrometer bis etwa 50 Mikrometer besitzt.

**Revendications**

1. Film adhésif comprenant:
   a) au moins une couche d'agent principal comprenant une résine ester cyanate ayant une masse moléculaire comprise entre environ 150 et environ 2 000, et une résine thermoplastique ayant une masse moléculaire d'environ 3 000 à environ 200 000, et
   b) au moins une couche de catalyseur comprenant d'environ 0,01 à environ 10 parties en poids pour 100 parties de la résine ester cyanate d'au moins un agent de durcissement choisi dans le groupe formé par les composés organométalliques, les chélates de métal, et les sels organiques de métal, et une résine thermoplastique ayant une masse moléculaire d'environ 3 000 à environ 200 000,

   dans laquelle la somme de la résine thermoplastique à la fois dans la couche d'agent principal et la couche catalytique est d'environ 10 à environ 300 parties pour 100 parties de résine ester cyanate.

2. Film adhésif selon la revendication 1, dans lequel la couche d'agent principal et la couche catalytique sont en contact l'une avec l'autre.

3. Film adhésif selon la revendication 1, dans lequel une troisième couche est interposée entre la couche d'agent principal et la couche catalytique.

4. Film adhésif selon la revendication 3, dans lequel ladite troisième couche comprend au moins un élément choisi dans le groupe formé par le polyvinylbutyral, la polysulfone, le nylon et une époxy/amine.

5. Film adhésif selon la revendication 4, dans lequel ladite troisième couche possède une épaisseur d'environ 0,1 micromètre à environ 50 micromètres.

6. Film adhésif selon la revendication 1, comprenant de plus une couche anti-adhésive.

7. Film adhésif selon la revendication 1, dans lequel la résine ester cyanate est choisie dans le groupe formé par les oligomères de dicyanates de bisphénol-A, les oligomères de dicyanates de tétra-o-méthylbisphénol F, et les oligomères de dicyanates de thiodiphénol, ledit oligomère ayant une masse moléculaire d'environ 250 à environ 1 200.

8. Film adhésif selon la revendication 7, dans lequel la résine thermoplastique est choisie dans le groupe formé par les polyvinylformyles, les polyvinylacétals, les polyvinylbutylols, le polyamide, les polyimides, les polysulfones, les polyesters, les polyesterimides, les polycarbonates, les polycarbonatesiloxanes, les polyéthers, les polyallylates, les polyimidesiloxanes, les résines phénoxy, SEBS carboxylé, les résines acryliques et les polyuréthannes.

9. Film adhésif selon la revendication 1, dans lequel la résine thermoplastique utilisée dans ladite couche d'agent principal est identique à la résine thermoplastique utilisée dans ladite couche catalytique.

10. Film adhésif selon la revendication 1, dans lequel la couche d'agent principal possède une épaisseur d'environ 1 micromètre à environ 100 micromètres, et la couche catalytique possède une épaisseur d'environ 0,1 micromètre à environ 50 micromètres.